# EUROPEAN PATENT APPLICATION

(11) **EP 1 107 155 A2**
(43) Date of publication of application: **13.06.2001**
(21) Application number: 00310102.9
(22) Date of filing: 14.11.2000
(51) Int. Cl.: G06F 17/60

(54) **Retail data distribution system**

(30) Priority: 03.12.1999 GB 9928702
(71) Applicant: Faith Footwear Limited, London NW10 6PX (GB)
(72) Inventor: Faith, Jonathan David, London NW4 1NR (GB); Winetroube, Howard Stephen, Buckinghamshire HP9 1BY (GB)
(74) Representative: Slingsby, Philip Roy

(57) **Abstract**

Salesman advisory apparatus for distributing retail data, comprising: data storage means arranged to hold product records for a plurality of product types; at least one portable wireless terminal comprising a first processing unit, a display, a user input device and a data capture device for input of information indicative of a product type; and server means capable of bi-directional wireless communication with the terminal and including a second processing unit; the terminal being arranged to capture by means of the data capture device information indicative of a first product type and to transmit that information to the server means in the form of a data request message; and the server means being arranged to, in response to the data request message, retrieve from the data storage means at least part of the product record for the first product type and transmit the said at least part of the product record to the terminal for display to a user.

## Description

This invention relates to a system for distributing retail data, for example to salesman handsets or other units.

Numerous shops display un-packaged samples of products in a showroom and store elsewhere packaged goods for purchase by customers. Typical examples of such shops include retailers of electrical goods and footwear. In those shops salesmen are employed to provide shoppers with information on the products, help customers to make a selection and obtain the goods from the store for supply to the customer.

In order to satisfy customers, such shops must be capable of providing accurate and up-to-date information on the products and their availability (e.g. whether they are in stock, or the delivery arrangements).

There is often little room in the shop for full details of each product to be displayed. Therefore, summaries of the products' features are often shown on small tickets near the products. However, these tickets may not give a shopper all the information he needs. Also, such tickets do not allow for accurate comparison between products because similar features may not have been selected for display on each ticket. Fixed installations can be provided, which include a computer having a store of product data, a display and an input device such as a touch screen. A shopper can then use such a terminal to retrieve information on a product. However, if the product is on display elsewhere in the shop the shopper can not view the product and learn its details at the same time. This is inconvenient. Salesmen can be trained to know the details of each product. However, in many shops there is a high turnover of staff and it is therefore expensive to fully train each salesman. Also, it is very difficult for even a fully trained salesman to remember all the details of every product in the shop - especially when complex items such as electronic equipment are being sold.

It is thus difficult for a shopper to find a product that meets his requirements, to make comparisons between products or to select a product.

If a shopper requests a product the salesman must go to the stock room where the goods are stored and check whether it is available. If it is not in stock then he must return and invite the shopper to choose another product. In some shops the stock room is some distance from the showroom. There is therefore a significant delay in checking on availability, which can irritate the shopper. If the shopper must choose another product the salesman will have difficulty in advising on a suitable alternative if he does not know the features of the other products well.

Many shops use promotional offers to increase sales. Signs indicating the products to which the offers apply can be placed in the shop near those products, but the signs are often obscured or misplaced. As a result, shoppers may not be informed of offers that apply to products they are buying. Such shoppers may be dissatisfied with the shop if they later learn that they were not informed of the special offer.

Some products have matching counterparts that shoppers might wish to purchase together, for example, a pair of shoes may match a handbag in the same style, or a toaster may match a kettle in the same style. These products present a problem to shopkeepers. In order to best inform a shopper of the fact that a matching product is available, and therefore increase the chance of selling both products together, both products should be displayed side-by-side. However, sales of the individual products items are more likely if they are displayed together with products of a similar purpose - for example if the handbag is displayed together with other handbags. Displaying such handbags in both locations wastes shop space.

There is therefore a need for a means whereby shoppers and/or sales staff may be better provided with more accurate and up-to-date information on available products, and to allow even relatively unskilled salesmen to provide shoppers with useful assistance.

According to one aspect of the present invention there is provided salesman advisory apparatus for distributing retail data, comprising: data storage means arranged to hold product records for a plurality of product types; at least one portable wireless terminal comprising a first processing unit, a display, a user input device and a data capture device for input of information indicative of a product type; and server means capable of bi-directional wireless communication with the terminal and including a second processing unit; the terminal being arranged to capture by means of the data capture device information indicative of a first product type and to transmit that information to the server means in the form of a data request message; and the server means being arranged to, in response to the data request message, retrieve from the data storage means at least part of the product record for the first product type and transmit the said part of the product record to the terminal for display to a user.

According to another aspect of the present invention there is provided a method for distributing retail data in a system comprising data storage means arranged to hold product records for a plurality of product types; at least one portable wireless terminal comprising a first processing unit, a display, a user input device and a data capture device for keyless data capture of information indicative of a product type; and server means capable of bi-directional wireless communication with the terminal and including a second processing unit; the method comprising the steps of: capturing at the terminal by means of the data capture device information indicative of a first product type; transmitting that information to the server means in the form of a data request message; in response to the data request message, retrieving by means of the server means from the data storage means at least part of the product record for the first product type; and transmitting the said at least part of the product record to the terminal for display to a user.

Preferably the terminal is arranged to capture by means of the data capture device information indicative of a second product type and to transmit that information to the server means in the form of a data comparison request message; and the server means is arranged to, in response to the data comparison message, retrieve from the data storage means at least part of the product record for the second product type; compare the said part of the product record for the first product type and the said part of the product record for the second type, generate comparison data dependant on that comparison, and transmit the comparison data to the terminal for display to a user. Alternatively the comparison may be performed by the terminal after having received the said parts of product records for both products. The data comparison message may include information indicative of the first product type.

The said parts of product records suitably include data defining features of products of the respective types. The said features may include technical features, price information, discount information, special offer information and/or other information.

The terminal may be arranged to receive product feature information and to transmit that information to the server means in the form of a feature request message; and the server means is arranged to, in response to the feature request message analyse the product records to determine the products best matching the product feature information, and transmit a list of those product types to the terminal for display to a user. Each product record may include a stock level value for the respective product type indicating an available stock level for each product type, and the server means is arranged to exclude from the said list all products for which the indicated available stock level is not greater than zero.

The terminal is suitably arranged to receive user input indicative of a sale being agreed for a product type, and to initiate a sale procedure by transmitting a sale message to the server indicating that product type. Each product record may include stock location data. The server may be arranged to, in response to receiving a sale message indicating a product type, retrieve from the data storage means the stock location data for the product type and transmit the stock location in a stock location message to a second terminal for display. Each terminal may be capable of operation in a sales mode for at least transmission of data request messages and a stock mode for at least receipt and display of stock location messages. Alternatively, a terminal may be capable of operation only in one of those modes, or in both modes simultaneously.

The data capture device is suitably a keyless data capture device, preferably an optical data capture device. The device may be a bar code reader.

Preferably each terminal has a terminal identifier. The data storage means may then be arranged to hold user records for a plurality of users; and to hold, when a terminal is in use by a user, a record of a user identifier of that user associated with the terminal identifier of that terminal. The system suitably includes at least one point of sale terminal and the server is arranged to, when a point of sale terminal indicates that a sale has been made corresponding to a previously transmitted sale message, update the user record for the user of the terminal that transmitted the sale message in accordance with the sale. The point of sale terminal may be a till, credit card reading terminal or the like.

The said part of the product record for the first product type suitably includes sales price information indicative of the price at which the user of the terminal may offer the first product type. The server may also be capable of modifying that price in dependence on the stored identity of the user and/or any user records for that user. The sales price information suitably includes information indicative of the discount that may be offered by the user of the terminal.

The present invention will now be described by way of example with reference to the accompanying drawings, in which:
figure 1 shows a schematic view of a system of processing retail data; and
figure 2 shows schematically the structure of a portable terminal.

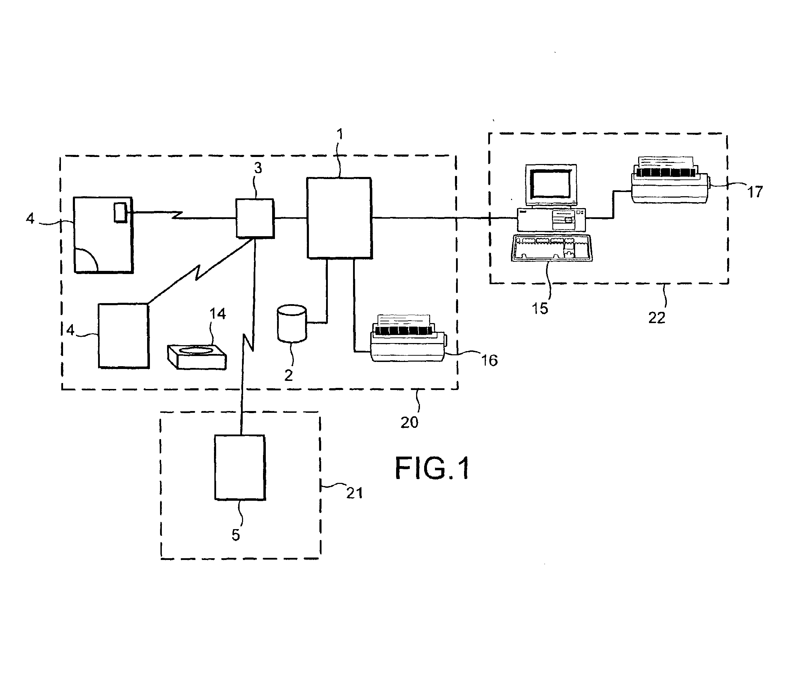

Figure 1 shows a system for processing retail data, with the principal aim of providing advisory information to salesmen. The system comprises a server unit 1. The server unit could be a conventional personal computer loaded with appropriate software for performing the functions described below. The server unit is connected to a data storage unit 2 to which it can store and from which it can retrieve stored information. The data storage unit is loaded with information on products for sale, as described below. The server unit is also connected to a wireless base station unit 3. The wireless base station unit 3 can communicate by radio with a plurality of portable wireless sales terminals 4, 5 etc. The communication unit provides an interface by which the server unit can transmit information to and receive information from any of the terminal units. The server unit is also connected to a plurality of point of sale terminals such as cash tills or the like.

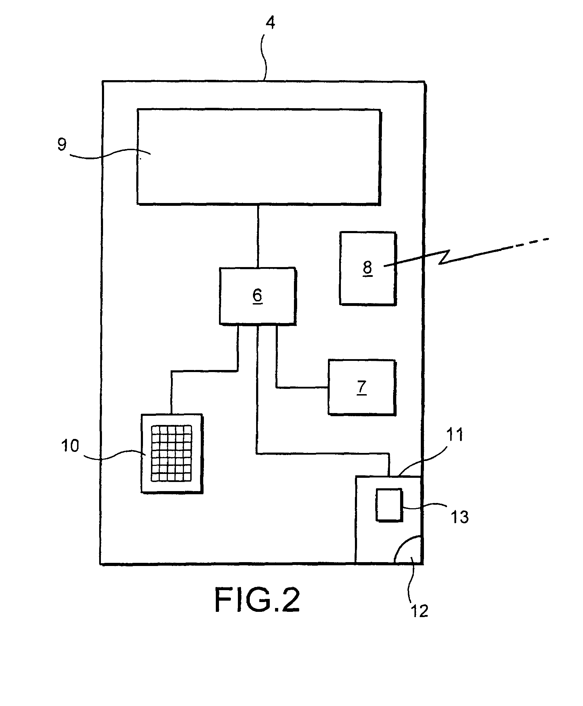

Figure 2 shows one of the portable wireless terminals in more detail. The terminal of figure 2 comprises a processor 6 which is connected to a non-volatile memory 7, a wireless terminal unit 8, a display 9, a keypad 10, and a bar code reader 11. Non-volatile memory 7 stores software for execution by the processor 6. Processor 6 includes temporary memory for use in executing such software. The wireless interface unit 8 is capable of communicating by radio with the base station unit 3. The processor 6 can thus communicate with the server unit by way of a radio link between terminal unit 8 and base station unit 3. Processor 6 can control the display 9 to display at least text information, and can receive input from keypad 10. The bar code reader 11 includes an optical sensor 12 and a bar code processing unit 13 for analysing input from the sensor as it is drawn by a user across a bar code and decoding it to determine the value encoded by the bar code. When the bar code reader is activated and detects a bar code it provides the value of that code to the processor 6. The portable terminal also includes a rechargeable battery as power source, which can be recharged when the terminal is stored in a recharger stand 14.

The base-station unit 3 and the wireless terminal units 8 of the portable terminals are arranged so that bi-directional radio communication can be carried out between the base-station unit and any of the terminals. Each terminal unit 8 may have a dedicated radio channel, or other means may be used so that each terminal ignores communications intended for another terminal. Communication between each terminal and the base station is in the form of discrete digital messages. Each message specifies the identity of the transmitting unit and the identity of the unit intended to receive the message. The base-station unit 3 and the wireless terminal units 8 may be based on the Piccolink system available from Nordic ID of Salo, Finland. The terminals are preferably of a sufficiently small size to be conveniently held and carried by hand.

Figure 1 shows the salesroom information system installed in a retail shop including a showroom 20 and a store room 21. Samples of product items that are available for sale are displayed in the showroom for shoppers to view. Close to each item (for example attached to the item or set into the front face of the shelf on which the item stands) is a ticket identifying the respective item. The ticket includes a bar code encoding the item's product code, and optionally a brief description of the item. Packaged goods for sale to customers are stored in store room 21 to which shoppers do not have access. When a shopper decides to make a purchase the required product is identified in the store room, from data supplied by the terminal, by the staff there and is brought to the point of sales terminals where the shopper can pay for it and collect it. This format of shop is typical of, for example, electrical goods retailers and shoe shops. The present invention is not limited to this format of shop and may be implemented in shops of other formats. In the example of figure 1, some of the terminals (shown at 4) are issued to staff in the showroom or shop floor who can carry the terminals with them as they consult with shoppers. Some of the terminals (shown at 5) are issued to staff in the store room 21.

Each of the products in the shop has a product code that is encoded as a bar code on its ticket. For each product code the data storage unit 2 can hold information in several categories, for example:
- price of the product
- features of the product;
- whether matching or complementary products are available;
- optional features of the product, for example different available colours;
- availability of the product in the store room 21 and/or delivery dates and arrangements for the product if it is not available from stock;
- location of the product in the stock room;
- special offers involving the product, for example promotions in which a shopper receives a gift with the product, or linked purchase offers in which a matching product is offered at a discount if bought together with the product itself;
- price history of the product, indicating whether the product is being offered for sale at a reduced price;
- an indication of the level of discount that a salesman may allow on the product.
This data forms a product database.

Each salesman has an identification number. The data storage unit 2 can also hold records of the performance of each salesman, for example:
- the total number and/or total value of products sold by the salesman over a set time period such as a day, week or month;
- the amount of discount given by the salesman;
- the number of enquiries handled by the salesman;
- the salesman's sales targets.
This data forms a salesman database.

Further information can also be stored in the data storage unit 2, as indicated below.

In use the salesroom information system of figure 1 is capable of providing salesmen with information on products so as to assist them in making sales, transferring information on sales around the shop so as to facilitate the process of making a sale, and gathering information on sales and enquiries for management use.

Each salesman carries a terminal 4 with him on the shop floor. The salesman may be issued with a personal terminal. Alternatively, a pool of terminals may be provided, and before using one of those terminals a salesman may enter his identification number into the terminal to identify himself to the system. The server 1 stores an indication of which salesman is currently associated with which terminal.

When a salesman is assisting a customer, his terminal 4 can provide him with information on products in a number of forms.

In a first mode, a salesman indicates by means of the keypad 10 of his terminal that he requires information on features of a product. The terminal may be in this mode by default. The processor 6 prepares to receive input from the bar code reader 11. The salesman swipes the sensor 12 over the barcode of the product's ticket, and the processor receives the value of the product's product code, which is encoded by the bar code. The processor 6 then causes a product information request message to be transmitted by wireless interface unit 8 to base station unit 3 and thence to server unit 1. The product information request message specifies the product code and indicates that information on that product is requested. The server unit 1 retrieves the information for that product from the storage unit 2 and causes a product information response message to be transmitted by base station unit 3 to interface unit 8 and thence to processor 8. Processor 8 then stores that information and can display any or all of it to the salesman using display 9. By this means, when a shopper asks the salesman for information on a product the salesman can swipe the barcode of the product, read the displayed information (using the keypad 10 to indicate to the processor which information is to be displayed) and provide the customer with the required information. That information may be some or all of the product information stored for the product. Initially only some of the information may be provided to the terminal, other information being provided on request. Alternatively all the available information may be provided initially. The choice between these modes depends on the speed of the server and the available wireless bandwidth and the available processing and memory capacity of the terminals in a specific application.

On receiving the appropriate information the salesman can tell the customer the features of the product, the available colours of the product, whether there are any special offers relating to the product, the price of the product etc. The salesman may also receive the information indicating the amount of discount available, in which case he is immediately able to answer any requests from the shopper for discount.

This facility provides great advantages over conventional sales procedures. Firstly, it makes it easier and more economical for a shop to provide customers with accurate information on products. Even relatively unskilled staff can operate the terminal to obtain the desired information from the server. There is no need for large product information sheets to be displayed, which occupy room on the shop floor and are costly to keep up to date. Secondly, the facility allows the salesman to provide a shopper with real-time information on the availability of the product in question in the store room or, if the product is not in stock, on the availability of deliveries of the product. Any special offers available on the product may be highlighted to the salesman so that he can bring them to the attention of the customer. This is especially important since the customer may be dissatisfied if he later finds that he has not been informed of a special offer that was available. Also, it allows the problem of displaying matching or complementary items to be addressed: when a customer enquires about a product the salesman is immediately able to inform him that a matching product is available, even if it not displayed at the same location in the shop.

If the shopper enquires about another product the salesman may then swipe the barcode of that product to retrieve its product information. That information may also be stored in the terminal 4.

By means of the keypad the salesman may indicate that a comparison is to be made of the features of the products whose information is stored. The processor 6 then compares the features and displays the differences to the salesman. This is valuable in assisting a shopper to decide between two products. The comparison of the products may be made at the server in response to a comparison request message from the terminal specifying the products. An appropriate comparison response message indicating the differences may then be sent from the server. This would reduce the amount of processing and memory capacity needed in the terminals.

In a second mode the salesman may enter into the terminal a list of product features sought by a shopper. The factors could be limited by, for example, price, brand or technical requirements of the shopper. That list is transmitted to the server which scans the product database to determine which products best match the shopper's specification. The server returns a message indicating the best matching products, which is displayed to the salesman as a list. The list may be sorted by the price of the products. The salesman may then request full product information for any of those products. In scanning for best matching products the server preferably ignores items that are out of stock, so that the customer will not be disappointed if he selects a product from the list that is unavailable.

The terminal is capable of displaying the features of a product, for example by retrieving a list of product featured from the store 2. The store may also be able to provide explanations of those features to assist inexperienced salesmen to explain details of the product to a shopper.

A salesman may request the server to provide an indication of alternatives to a product that has been selected. This allows the salesman to attempt to satisfy a customer who requests an item that is out of stock. The server may select possible alternatives by determining the products that are in stock that best match the unavailable item.

A printer 16 is connected to the server and located on the shop floor. A salesman can transmit to the server a print request message specifying one or more products. In response the server prints details of those products using printer 16, which the salesman can give to a shopper to help him decide on a purchase.

The terminal may be capable of providing information relating to alternative products to one in which a shopper is interested. For example, to assist a salesman in selling up the terminal may be able to recall from the store 2 details of the additional features that are provided by the next more expensive product above that in which a shopper is interested.

When the shopper has selected a product the salesman indicates by means of the keypad that a sale is to be made and then makes an input by means of the keypad (e.g. to indicate purchase of an item whose details are displayed on the terminal) or by means of swiping the product's bar code with the sensor 12 of bar code reader 11 to indicate to the processor 6 the product that is to be sold. The processor 6 then causes a sale initiation message (which identifies the product that is to be sold) to be transmitted to the server 1. In response to that message the server 1 verifies from the product database that the requested product is in stock. Server 1 then transmits a product request message (which identifies the product that is to be sold, and indicates its location in the stock room) to a terminal 5 in the stock room. The user of that terminal goes to the indicated location, picks the product to be sold and takes it to a point of sale terminal in the shop. If necessary, the user of the terminal 5 can then transmits a product ready message (indicating the product) to the server 1 which can return a sale ready to the terminal 4 of the salesman who made the sale so that he can inform the shopper that the product is ready for collection. At the point of sale terminal the shopper pays for and collects the product. The point of sale terminal transmits a sale message to the server, which decrements the stored stock quantity for the product in the product database, and updates the salesman record of the salesman who made the sale with the details of the product that was sold.

If the stock room is large there may be several users of terminals ("pullers") in the stock room. Each puller may indicate to the server that he will work in a specified region of the stock room. The server may then direct each product request message to the puller working in the appropriate area of the stock room.

Each salesman can retrieve his own salesman information from the server to check his current performance against his targets. A manager in his office 22 can also retrieve all the sales information using a personal computer 15 connected to the server. The computer 15 can be used to retrieve from the data storage unit 2 the total branch performance versus target. The computer 15 The computer 15 can also be used to update the product database and the salesman database with new information, for example details of additional products, new special offers or revised salesman targets. The computer 15 may also be used to alter the price of products, or the discount that may be offered on them, in real time. For example, if the manager determines that there is a need to sell more of a certain product he can reduce the price stored for the product and salesmen will immediately be able to offer the product at the reduced price. The prices may be altered from a remote terminal, e.g. at a head office, that is connected to the system. The system may initiate perpetual inventory stock control.

A printer 17 is connected to the computer 15 to allow data to be printed out and new product tickets including bar codes to be printed for use on the shop floor.

The server 1 can be configured to initiate collection by salesmen of information on customers. In one approach, after a salesman has received an enquiry from a shopper the server transmits to that salesman's terminal a request for information that the salesman can provide without asking the shopper - for example the sex, estimated age of the shopper, whether the shopper knew what he wanted or required advice, whether and why a sale was made or not. In a second approach the server transmits to the salesman's terminal a request for him to ask the shopper for information of that type. Information of this type may be collected continuously, at random times or periodically - for example on every fifth enquiry. Information of this type may be collected at all times of the day or just when the shop is relatively quiet and salesmen have time to answer the requests for information. To answer a request for information the salesman enters the data using the keypad of his terminal and then causes it to be transmitted to the server. The server may then store the information in a survey database in the storage unit 2, from which it may be retrieved by management computer 15.

Data may also be collected on lost sales. The system may log details of events when a salesman's terminal requests data on a product that is in stock, but no sale is made. These events may be assumed to correspond to instances of customers expressing interest in a product but not making a purchase. This data may provide useful management data on salesmen's performance.

Whenever the identity of a product is to be indicated to the processor 6 it is preferred that the salesman can do so in any available way, for example by swiping the product's bar code, entering the product's code using the keypad or selecting the product using the keypad from a displayed list.

Data is suitably entered into terminals 4,5 in fields displayed on the terminal's display screen. Fields on the terminal are terminated by either reaching the end of the field; or by hitting an <ENTER> key. Transactions are only routed to the back office application run by the server 1 when either the end of the final field on the screen has been reached, or the user presses <ENTER> in the last field on the screen. An escape key is provided on the keypad to enable the operator to return one step. A key is provided to enable the user to void whatever transaction they are in the middle of and return to a main menu screen. Functions are actioned by pressing a hot-key relevant to the event (for instance, a key marked 'A' may invoke Alternatives). Such an 'A' key may also have "B" and "C" marked on it (as a standard telephone keypad); but each key only has one hot-key purpose (to avoid any confusion).

The top line of the display is suitably a hardware based icon line. Then, there are 8 usable lines below this. It is assumed that an 8 line x 20 column display screen will be available on the terminal, and line 1 of the display area will be static. Lines 2 - 8 will allow scrolling of information where applicable. Line 8 will generally be the area where error messages are displayed. If scrolling is applicable to the screen then an arrow indicator will be displayed at the right-hand side of the icon line.

Selection from a menu is suitably by using a arrow keys in the keypad to highlight the appropriate option and then pressing the <ENTER> key; or by using the appropriate hot-key. The cursor on the terminal is indicated by a blinking block (1 character; alternating between inverse and normal video)

Upon switching on a terminal; a salesman or sales assistant logs-on, to ensure that all auditable transactions (such as sales/returns) are associated with the correct assistant. An assistant can only log onto one terminal at once. The entered assistant ID is validated against the salesman database and if invalid an error appears on the terminal display. For a valid log-on; the terminal ID of the terminal logged-onto is be stored against the record for the salesman whose ID has been entered for the course of this "session". The user is then be presented with a main menu. The main menu may provide options such as: Selling, Pull Stock, UnPull Stock, Exchange/Refund, Sales Floor Stock, Goods In/Out, Price/Style Enquiry, Faulty Stock Returns, Inter-Branch Transfer, Log Off. The operator can use the arrow keys to scroll through the options.

After a period of inactivity of a set duration the terminal preferably logs off, terminating its connection to the base station.

Data may be transmitted from each terminal to the base station by wireless means other than radio, for example optically.

The bar code reader of the terminal may be replace by another keyless means suitable for detecting product information, for example a scanner capable of optically detecting and machine reading a printed name of the product, or a magnetic sensor capable of reading a magnetic strip on the product or a ticket associated with the product.

The present invention may include any feature or combination of features disclosed herein either implicitly or explicitly or any generalisation thereof irrespective of whether it relates to the presently claimed invention. In view of the foregoing description it will be evident to a person skilled in the art that various modifications may be made within the scope of the invention.

## Claims

1. Salesman advisory apparatus for distributing retail data, comprising:
data storage means arranged to hold product records for a plurality of product types;
at least one portable wireless terminal comprising a first processing unit, a display, a user input device and a data capture device for input of information indicative of a product type; and
server means capable of bi-directional wireless communication with the terminal and including a second processing unit;
the terminal being arranged to capture by means of the data capture device information indicative of a first product type and to transmit that information to the server means in the form of a data request message; and the server means being arranged to, in response to the data request message, retrieve from the data storage means at least part of the product record for the first product type and transmit the said at least part of the product record to the terminal for display to a user.

2. Salesman advisory apparatus as claimed in claim 1, wherein the data capture device is a keyless data capture device for keyless data capture of information indicative of a product type.

3. Salesman advisory apparatus as claimed in claim 2, wherein the data capture device is a bar code reader.

4. Salesman advisory apparatus as claimed in any preceding claim, wherein the terminal is arranged to capture by means of the data capture device information indicative of a second product type and to transmit that information to the server means in the form of a data comparison request message; and the server means is arranged to, in response to the data comparison message, retrieve from the data storage means at least part of the product record for the second product type; compare the said part of the product record for the first product type and the said part of the product record for the second type, generate comparison data dependant on that comparison, and transmit the comparison data to the terminal for display to a user.

5. Salesman advisory apparatus as claimed in any preceding claim, wherein the said parts of product records include data defining features of products of the respective types.

6. Salesman advisory apparatus as claimed in any preceding claim, wherein the data comparison message includes information indicative of the first product type.

7. Salesman advisory apparatus as claimed in any preceding claim, wherein the terminal is arranged to receive product feature information and to transmit that information to the server means in the form of a feature request message; and the server means is arranged to, in response to the feature request message analyse the product records to determine the products best matching the product feature information, and transmit a list of those product types to the terminal for display to a user.

8. Salesman advisory apparatus as claimed in claim 7, wherein each product record includes a stock level value for the respective product type indicating an available stock level for each product type, and the server means is arranged to exclude from the said list all products for which the indicated available stock level is not greater than zero.

9. Salesman advisory apparatus as claimed in any preceding claim, wherein the terminal is arranged to receive user input indicative of a sale being agreed for a product type, and to initiate a sale procedure by transmitting a sale message to the server indicating that product type.

10. Salesman advisory apparatus as claimed in claim 9, wherein each product record includes stock location data and the server is arranged to, in response to receiving a sale message indicating a product type, retrieve from the data storage means the stock location data for the product type and transmit the stock location in a stock location message to a second terminal for display.

11. Salesman advisory apparatus as claimed in claim 9, wherein each terminal is capable of operation in a sales mode for at least transmission of data request messages and a stock mode for at least receipt and display of stock location messages.

12. Salesman advisory apparatus as claimed in any preceding claim, wherein each terminal has a terminal identifier; the data storage means is arranged to hold user records for a plurality of users; and to hold, when a terminal is in use by a user, a record of a user identifier of that user associated with the terminal identifier of that terminal.

13. Salesman advisory apparatus as claimed in claim 12, as dependant directly or indirectly on claim 11, wherein the system includes at least one point of sale terminal and the server is arranged to, when a point of sale terminal indicates that a sale has been made corresponding to a previously transmitted sale message, update the user record for the user of the terminal that transmitted the sale message in accordance with the sale.

14. Salesman advisory apparatus as claimed in any preceding claim, wherein the said at least part of the product record for the first product type includes sales price information indicative of the price at which the user of the terminal may offer the first product type.

15. Salesman advisory apparatus as claimed in claim 14, wherein the sales price information includes information indicative of the discount that may be offered by the user of the terminal.

16. A method for distributing retail data in a system comprising data storage means arranged to hold product records for a plurality of product types; at least one portable wireless terminal comprising a first processing unit, a display, a user input device and a data capture device for keyless data capture of information indicative of a product type; and server means capable of bi-directional wireless communication with the terminal and including a second processing unit; the method comprising the steps of: capturing at the terminal by means of the data capture device information indicative of a first product type;
transmitting that information to the server means in the form of a data request message;
in response to the data request message, retrieving by means of the server means from the data storage means at least part of the product record for the first product type;
transmitting the said at least part of the product record to the terminal for display to a user.
